# EUROPEAN PATENT APPLICATION

(11) **EP 2 471 694 A2**
(43) Date of publication of application: **04.07.2012**
(21) Application number: 11193636.5
(22) Date of filing: 15.12.2011
(51) Int. Cl.: B60W 40/09, G07C 5/08

(54) **Method and system for assessing driving behaviour**

(30) Priority: 04.01.2011 SE 1150001
(71) Applicant: Scania CV AB, 151 87 Södertälje (SE)
(72) Inventor: Sandberg, Tony, 645 44 Strängnäs (SE); Ah-King, Joseph, 151 60 Södertälje (SE); Johansson, Anders, 146 31 Tullinge (SE); Dellrud, Jan, 640 50 Björnlunda (SE)

(57) **Abstract**

The invention relates to a system for assessing the driving behaviour of a driver of a vehicle A. The system comprises a status unit (1) adapted to receiving status information about at least one other vehicle B in vehicle A's neighbourhood, and to generating an information signal S_{I} which presents that status information; a situation unit (2) adapted to receiving status information about vehicle A and its surroundings, analysing vehicle A's situation at the time, and generating a situation signal S_{S} which presents that situation; a risk unit (3) adapted to determining whether vehicle B was in a risky situation due to the actions of vehicle A's driver, based on predetermined situation criteria and said status information and situation analysis, and generating a risk signal S_{R} which presents that determination. The invention comprises also a method for assessing the driving behaviour of a driver of a vehicle A.

## Description

### Field of the invention

The present invention relates to a method and a system for assessing a driver's driving behaviour according to the preambles of the independent claims, particularly when affected by actions of other vehicles

### Background to the invention

Driver training includes drivers being trained to drive safely and economically. To help maintain these skills even after the training, systems have been developed which provide drivers with real-time guidance in the form of hints and feedback for improving their driving style.

The assessment of driving on hills covers for example the use of gears, accelerator pedal and engine torque in undulating terrain. The driver's ability to foresee various situations may also be assessed on the basis of accelerations and speed reductions and the interval between acceleration and braking. Use of brakes may also be assessed, and choice of gears depending on engine load and terrain. The assessment also involves important factors which substantially affect safety, the environment and vehicle economics.

The results of the assessment are analysed and presented to the driver in a display in the vehicle's instrument panel, e.g. in the form of a points score and any relevant hints. The assessment may for example be divided into various categories or be presented in the form of a total score. The driver may also be given a comprehensive driving style analysis.

US2009/0319095 describes a system for predicting how a vehicle's current settings will affect it in the light of the nature of the road ahead. The prediction is presented in a display, enabling the driver to alter the settings in order to drive in a more desirable way.

US2004/0030458 describes a device for evaluating a driver's driving performance, which entails continuously monitoring the current driving state and the current traffic state and determining a reference state which represents the current traffic situation. The current driving state is evaluated by comparing it with the reference state.

The systems described are concerned with how the driver drives the vehicle in response to the nature of the road, but not how choices made by him/her affect other road users. A not very perceptive driver may not realise that his/her choices might cause other road users to have to brake hard or steer away to avoid collisions. Motorcyclists have to be particularly alert, since they are relatively small and often at unsighted angles.

The object of the invention is to propose a system which assesses a driver's driving behaviour in a way which takes into account how his/her driving behaviour causes other drivers to act.

### Summary of the invention

The object described above is achieved by a system for assessing the driving behaviour of a driver of a vehicle A. The system comprises a status unit adapted to receiving status information about at least one other vehicle B in vehicle A's neighbourhood and to generating an information signal S_{I} which presents that status information. The system further comprises a situation unit adapted to receiving status information about vehicle A and its surroundings, to analysing vehicle A's situation at the time and to generating a situation signal S_{S} which presents that situation. The system comprises also a risk unit adapted to determining whether vehicle B was in a risky situation due to the actions of Vehicle A's driver, based on predetermined situation criteria and said status information and situation analysis, and to generating a risk signal S_{R} which presents that determination.

In another aspect, the system comprises a method for assessing the driving behaviour of a driver of a vehicle A. The method comprises:
- receiving status information about at least one other vehicle B in vehicle A's neighbourhood, and generating an information signal S_{I} which presents that status information;
- receiving status information about vehicle A and its surroundings, analysing vehicle A's situation at the time and generating a situation signal S_{S} which presents that situation;
- determining whether vehicle B was in a risky situation due to the actions of Vehicle A's driver, based on predetermined situation criteria and said status information and situation analysis, and generating a risk signal S_{R} which presents that determination.

According to an embodiment, vehicle A and/or vehicle B are adapted to wireless communication which may take place between vehicles, so-called V2V (vehicle-to-vehicle) communication, and/or between vehicle and infrastructure, so-called V2I (vehicle-to-infrastructure) communication. This is a technology worked with in a number of global projects between various participants in the vehicle industry. Examples of recent projects which may be cited are CVIS (Cooperative Vehicle Infrastructure Systems), Safespot and CoCAR (Cooperative Cars). The technology used in systems in those projects is based either on WLAN (Wireless Local Area Network) or on GPRS (General Packet Radio Service). Vehicles adapted to V2V communication can exchange information directly with one another. Those adapted to V2I communication can exchange information indirectly with one another via one or more external infrastructure units.

The invention makes it possible for example to calculate how many times a vehicle B is put into a risky situation by vehicle A's driving behaviour. The result is an assessment of the driver's driving behaviour based on how other road users perceive his/her actions in traffic. This information may also be conveyed to hauliers or management centres to contribute to better traffic safety by making them aware of the driver's reckless driving and thereby enabling them to initiate improvements to his/her mode of driving. The information may also affect the ratings which vehicle A's driver is given on his/her mode of driving in an existing driving support system.

Information about how vehicle A and surrounding traffic move can be used to make risk assessments with regard inter alia to collisions. For example, a vehicle near to vehicle A which has to take evasive action to avoid colliding with vehicle A lowers the driving style rating of vehicle A's driver.

If vehicle B has a system for assessing its driver's behaviour, the system may, according to an embodiment, be adapted to receiving said risk signal S_{R} and using it in the assessment and rating of his/her driving behaviour. If vehicle B was in a risky situation due to the behaviour of vehicle A's driver, said system in vehicle B may for example disregard its own driver's behaviour in the risky situation or may in some other way adjust its assessment of him/her.

Examples of traffic situations where this might be applied are turning left when other vehicles are about to overtake, or turning left where vehicles travelling in the opposite direction have to brake hard to avoid colliding. Lane changes where small vehicles or motorcycles travelling at high speed may well be unseen at dead angles are further examples of traffic situations which often put other vehicles into risky situations.

Preferred embodiments are described in the dependent claims and the detailed description.

### Brief description of the attached drawings

The invention is described below with reference to the attached drawings, in which:
Figure 1 is a block diagram of a system according to an embodiment of the invention.
Figure 2 depicts an example of where a risky situation might arise when vehicle A joins a traffic lane in which vehicle B is already travelling.
Figure 3 is a flowchart for a method according to an embodiment of the invention.

### Detailed description of preferred embodiments of the invention

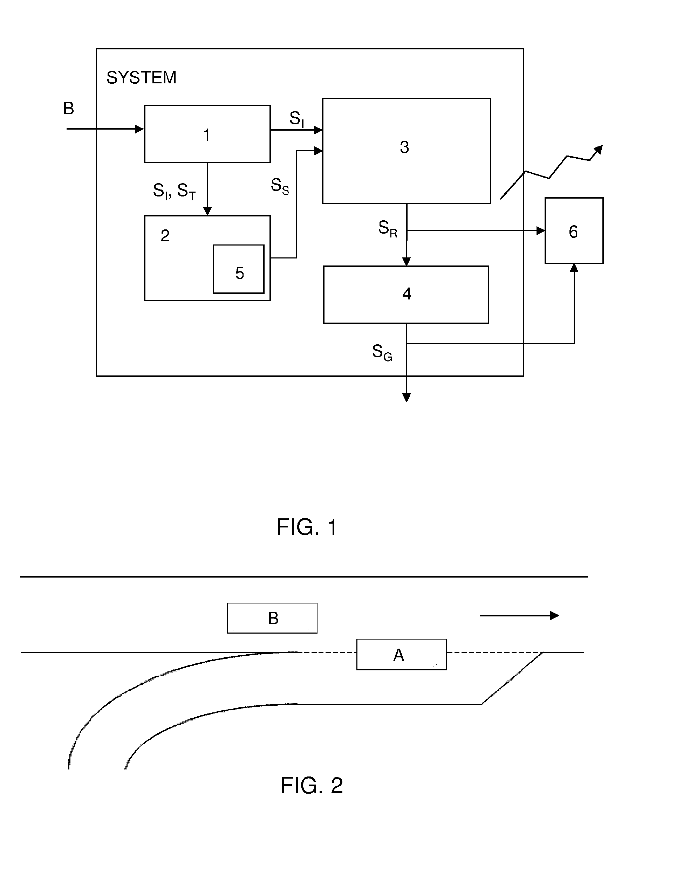

Figure 1 depicts a system for assessing the driving behaviour of a driver of a vehicle A. The system may be situated in vehicle A or be wholly or partly situated externally from vehicle A, e.g. in a central unit at a haulier's premises. The system comprises a status unit 1 adapted to receiving status information about at least one other vehicle B in vehicle A's neighbourhood and to generating an information signal S_{I} which presents that status information. According to an embodiment, the status unit is adapted to receiving said status information about at least one other vehicle B by V2V or V2I (vehicle-to-infrastructure) communication. This communication may for example take place via GPRS or WLAN. According to an embodiment, vehicles A and B are both adapted to wireless communication and consequently, according to an embodiment, to V2V and/or V2I communication. The system comprises also a situation unit 2 adapted to receiving status information about vehicle A and its surroundings, to analysing vehicle A's situation at the time and to generating a situation signal S_{S} which presents that situation. According to an embodiment, the situation unit 2 may receive the status information via a detector system 5, which in that case will be on board vehicle A. The detector system 5 may comprise at least one radar unit, camera unit or laser unit. The detector system may for example detect distances from nearby objects, and vehicle A's speed relative to other objects. Vehicle B may also have such a detector system 5 to receive status information about it. According to another embodiment, the status unit 1 is adapted to receiving status information about vehicle B via a detector system 5 adapted to detecting status information for the vehicle, e.g. its location, speed, acceleration etc. The system may thus receive status information about vehicle B without using V2V or V2I communication.

Analysis of vehicle A's situation at the time is done on the basis of sensor values from the aforesaid detector systems and also, according to an embodiment, on the basis of data from one or more positioning systems such as GPS (Global Positioning System), map data, V2V communication, V2I communication etc. Examples of traffic situations arising for vehicle A after analysis are accelerating to overtake, lane change, left turn, right turn, overtaking and maintenance of spacing.

The system comprises also a risk unit 3 adapted to determining whether vehicle B was in a risky situation due to actions of vehicle A's driver, based on predetermined situation criteria and said status information and situation analysis, and to generating a risk signal S_{R} which presents that determination. Status information from vehicle B may here be analysed and compared with limit values to ascertain whether the vehicle acted in an unexpected way, e.g. powerful retardation, crash signal, powerful veering, etc. Alternatively, a trigger signal S_{T} may already be generated in the status unit 1, as will be explained in more detail further on.

If the analysis of status information from vehicle B indicates that the vehicle acted in an unexpected way and was potentially exposed to risk by actions of vehicle A's driver, determination of what caused the situation is initiated. A number of parameters may be used here to determine what caused the dangerous situation and how well vehicle A's driver handled the situation. According to an embodiment of the invention, said situation criteria comprise at least one predetermined limit value for said status information and situation, with a view to determining what caused the dangerous situation. Depending on vehicle A's situation at the time, various parameters are thus assessed and compared with various limit values. In the situation of accelerating to overtake, for example, a criterion for vehicle A is the use of flashers. Their use may then be analysed by comparing data about their use with various limit values (were flashers used? how long before the sideways movement were flashers used? etc.). Other parameters to be taken into account are the vehicle's speed, use of brakes, lane positioning, use of overtaking lane in the light of the vehicle's performance, etc. Depending on whether vehicle A fulfilled criteria and limit values for the situation, the risk unit assesses whether its driver caused the risky situation for vehicle B. If for example vehicle A's driver did not use flashers at all when accelerating to overtake, he/she is regarded as having caused the risky situation for vehicle B. This information may for example be used to find out how many times the driving behaviour of vehicle A's driver has adverse effects on other drivers.

The risk signal S_{R} may thus be used to assess the driver's driving behaviour. It may be used independently and fed back to the driver or, for example, be used as part of other assessments of his/her driving behaviour. Other assessments may for example be the driver's ability to foresee various situations, use of brakes, acceleration, choice of gears etc. The system may also comprise a rating unit 4 adapted to rating the driver's driving behaviour based on said risk assessment, and to generating a rating signal S_{G} which presents the result. This result may then be presented to the driver, e.g. via a display unit in his/her instrument panel in the form of a rating on a graduated scale, as a warning and/or with recommendations and hints on how he/she should have acted. According to an embodiment, this rating may affect ratings for other assessments.

If the vehicle belongs to a haulier, the latter may gather information about how many times nearby vehicles have been put into a risk situation by vehicle A's driving behaviour. The haulier may also receive rating assessments of each individual driver's driving behaviour in traffic hazard situations. Insurance companies and the like may gather statistics about how many dangerous situations occur per journey and vehicle of a particular haulier which is their customer, and these statistics may be used as a basis for setting premiums. Statistics may also be gathered about how many dangerous situations have occurred on a given stretch of road, intersection, slip road or the like, with a view to being able to design safer roads.

According to an embodiment of the invention, said status unit 1 is adapted to comparing said status information from another vehicle B with at least one predetermined threshold value for the status information, and to generating on the basis of the comparison a trigger signal S_{T} usable in determining whether vehicle B was in a risky situation. Examples of various categories of threshold values appear below. The trigger signal S_{T} may therefore be used to initiate the whole function of assessing whether vehicle A's driver drove in such a way that vehicle B was put into a risky situation. According to an embodiment, the situation unit 2 is adapted to waiting, before any situation analysis is begun, for a trigger signal S_{T} to the effect that vehicle B was potentially in a risky situation caused by vehicle A. The function triggering may be applied to keep data which would otherwise only be saved for a limited time (e.g. 20 seconds), and then to start processing of data which ultimately leads to situation analysis, risk analysis and ratings.

The following are examples of triggers:
● Retardation exceeding a certain threshold value, e.g. speed decrease calculated from wheel speed signals, brake pressures or rates of brake pedal depression.
● Veering more than a certain threshold value, e.g. registered by accelerometer or by gyro or in the form of large steering wheel angles relative to vehicle speed.
● Shorter distances from other objects (vehicles, persons, installations) than a threshold value which depends on the relative speed between vehicle and object. Radar, cameras or lasers may for example be used.
• Collisions detected by, for example, crash sensors or accelerometers.

Figure 2 depicts an example of how a risky situation for vehicle B might be demonstrated and assessed. Vehicle B is travelling on a motorway which vehicle A is joining via a slip road. Vehicle A is joining the motorway at a relatively low speed, e.g. 50 km/h. Its slow speed forces the driver of vehicle B to brake sharply. In this example the system according to the invention is situated in vehicle A. It receives status information from vehicle B by V2V communication to the status unit 1, e.g. vehicle B's location, speed, acceleration/retardation etc. By comparing the retardation with a predetermined threshold value for retardation, the status unit 1 finds that vehicle B has braked so sharply that the retardation exceeds the threshold value for retardation. The status unit 1 then generates a trigger signal S_{T} to the effect that vehicle B had to brake sharply. The trigger signal S_{T} and the information signal S_{I} conveying vehicle B's status information are then sent to the situation unit 2. As a trigger signal S_{T} was generated to the effect that vehicle B braked beyond the threshold value for retardation, the situation unit begins to analyse vehicle A's situation at the time. The situation unit 2 receives status information about vehicle A and uses, for example, sensor signals from the detector system 5. The unit may for example use GPS and map data to ascertain the vehicle's location on the road and what sort of road it is. This information shows the situation unit 2 that vehicle A is on a slip road and about to join a motorway. The situation unit 2 then generates a situation signal S_{S} which is sent to the risk unit 3 to the effect that the situation for vehicle A is equivalent to accelerating to overtake. The risk unit receives said situation signal S_{S} and compares status information from vehicle A with predetermined criteria for accelerating to overtake. For example, the speed of vehicle A may be compared with a predetermined threshold value for its speed, which may of course vary, e.g. depending on prevailing speeds for the motorway or slip road. If for example, vehicle A's speed was below the speed limit value and the distance between vehicles A and B was below a limit value for the distance between them when vehicle B began to brake, vehicle B is assessed as having been in a risky situation and a risk signal S_{R} to this effect is generated. The driver's actions are therefore analysed, and examples of incorrect actions might be that vehicle A's speed was too low and that the driver did not use his/her flashers until the vehicle had begun moving into the traffic lane in which vehicle B was already travelling. The risk signal S_{R} may also indicate what the driver did wrong. This risk signal S_{R} may for example be presented to the driver via a display unit 6 in the vehicle or be received for statistical purposes by a haulier, e.g. by V2I communication.

The driver's actions may then be rated by a rating unit 4, e.g. on a scale of from 0 to 10. The rating may be presented to the driver via a display unit 6 and/or be sent to hauliers or the like for statistical and information purposes.

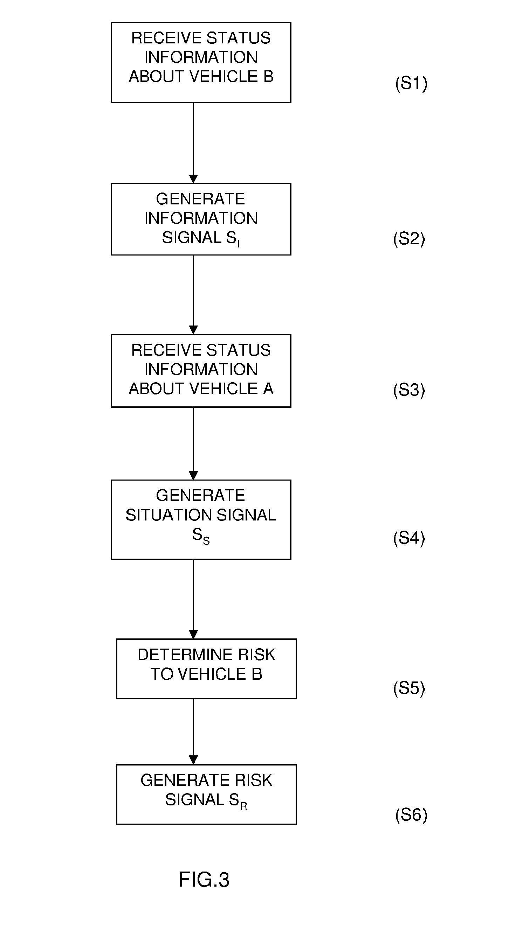

The invention comprises also a method for assessing the driving behaviour of a driver of a vehicle A. The method is illustrated by the flowchart in Figure 3. It comprises a first step S1 of receiving status information about at least one other vehicle B in vehicle A's neighbourhood, and a step S2 of generating an information signal S_{I} which presents that status information. As a third step S3, status information about vehicle A and its surroundings is received and vehicle A's situation at the time is analysed, and as a fourth step S4 a situation signal S_{S} which presents that situation is generated. The method comprises a fifth step S5 of determining whether vehicle B was in a risky situation due to the actions of vehicle A's driver, based on predetermined situation criteria and said status information and situation analysis, and a sixth step S6 of generating a risk signal S_{R} which presents that determination. By for example totalising the number of times a risk signal is generated to the effect that vehicle B was exposed to risk by vehicle A's actions it is possible to derive statistics on how many times vehicle A's driver has put another vehicle at risk.

Said status information about at least one other vehicle B is received, according to an embodiment, by communication between vehicles (V2V communication) and/or between vehicle and infrastructure (V2I communication). Status information about vehicle A and its surroundings is for example obtained by analysing signals from at least one radar unit, camera or laser unit. Status information about vehicle B will be obtainable in a similar way.

According to an embodiment of the invention, the method comprises comparing said status information from another vehicle B with at least one predetermined threshold value for the status information, and generating on the basis of the comparison a trigger signal S_{T} usable for determining whether vehicle B was in a risky situation. Status information from vehicle B may thus be used to initiate the assessment of the driving behaviour of vehicle A's driver. For example, retardation exceeding a certain threshold value, crash signals etc. may generate a trigger signal S_{T} which indicates that vehicle B acted in an unusual way.

According to a further embodiment, the method comprises grading the driver's driving behaviour based on said assessment, and generating a grading signal S_{G} which represents that rating. This rating may then be presented to the driver via a display unit in the instrument panel or be accumulated for statistical and information purposes by, for example, a haulier.

The invention relates also to a computer programme product which comprises programme instructions for enabling a computer system in a vehicle to perform steps according to the above method when those instructions are run on said computer system. The invention comprises also a computer programme product in which the programme instructions are stored on a medium which can be read by a computer system.

The present invention is not restricted to the embodiments described above. Sundry alternatives, modifications and equivalents may be used. The aforesaid embodiments therefore do not limit the invention's scope which is defined by the attached claims.

## Claims

1. A system for assessing the driving behaviour of a driver of a vehicle A, **characterised in that** the system comprises:
- a status unit (1) adapted to receiving status information about at least one other vehicle B in vehicle A's neighbourhood, and to generating an information signal S_{I} which presents that status information;
- a situation unit (2) adapted to receiving status information about vehicle A and its surroundings, analysing vehicle A's situation at the time, and generating a situation signal S_{S} which presents that situation;
- a risk unit (3) adapted to determining whether vehicle B was in a risky situation due to the actions of vehicle A's driver, based on predetermined situation criteria and said status information and situation analysis, and generating a risk signal S_{R} which presents that determination.

2. A system according to claim 1, in which said status unit is adapted to receiving said status information about at least one other vehicle B by communication between vehicles (V2V communication).

3. A system according to claim 1 or 2, in which said status unit is adapted to receiving said status information about at least one other vehicle B by communication between vehicle and infrastructure (V2I communication).

4. A system according to any one of the foregoing claims, in which said situation unit (2) comprises a detector system (5) itself comprising at least one radar unit, one camera unit or one laser unit.

5. A system according to any one of the foregoing claims, in which said status unit (1) is adapted to comparing said status information from another vehicle B with at least one predetermined threshold value for the status information, and to generating on the basis of the comparison a trigger signal S_{T} usable for determining whether vehicle B was in a risky situation.

6. A system according to any one of the foregoing claims, in which said situation criteria comprise at least one predetermined limit value for said status information and situation.

7. A system according to any one of the foregoing claims, comprising a rating unit (4) adapted to rating the driver's driving behaviour based on said assessment, and to generating a rating signal S_{G} which presents that rating.

8. A method for assessing the driving behaviour of a driver of a vehicle A, which comprises:
- receiving status information about at least one other vehicle B in vehicle A's neighbourhood, and to generating an information signal S_{I} which presents that status information;
- receiving status information about vehicle A and its surroundings, analysing vehicle A's situation at the time, and generating a situation signal S_{S} which presents that situation;
- determining whether vehicle B was in a risky situation due to the actions of vehicle A's driver, based on predetermined situation criteria and said status information and situation analysis, and generating a risk signal S_{R} which presents that determination.

9. A method according to claim 8, in which said status unit is adapted to receiving said status information about at least one other vehicle B by communication between vehicles (V2V communication).

10. A method according to claim 8 or 9, in which said status unit is adapted to receiving said status information about at least one other vehicle B by communication between vehicle and infrastructure (V2I communication).

11. A method according to any one of claims 8 to 10, comprising status information about vehicle A and its surroundings being obtained by analysing signals from at least one radar unit, camera unit or laser unit.

12. A method according to any one of claims 8 to 11, comprising comparing said status information from another vehicle B with at least one predetermined threshold value for the status information, and to generating on the basis of the comparison a trigger signal S_{T} usable for determining whether vehicle B was in a risky situation.

13. A method according to any one of claims 8 to 12, whereby said situation criteria comprise at least one predetermined limit value for said status information and situation.

14. A method according to any one of claims 8 to 13, comprising a rating unit (4) adapted to rating the driver's driving behaviour based on said assessment, and to generating a rating signal S_{G} which presents that rating.

15. A computer programme product comprising programme instructions for enabling a computer system in a vehicle to perform steps according to the method of any of claims 8 to 14 when those instructions are run on said computer system.

16. A computer programme product according to claim 15, in which the programme instructions are stored on a medium which can be read by a computer system.
